# FASCICULE DE BREVET EUROPEEN

(11) **EP 2 906 623 B1**
(45) Date de publication et mention de la délivrance du brevet: **11.12.2019**
(21) Numéro de dépôt: 13776778.6
(22) Date de dépôt: 10.10.2013
(51) Int. Cl.: C08L 7/00, C08L 9/00, C08L 9/06, C08L 53/02, C08K 3/04, C08K 3/26

(54) **GOMME INTÉRIEURE DE PNEUMATIQUE**
REIFENINNENSCHICHT
TYRE INNER LINER

(30) Priorité: 15.10.2012 FR 1259790
(43) Date de publication de la demande: 19.08.2015
(73) Titulaire: Compagnie Générale des Etablissements Michelin, 63000 Clermont-Ferrand (FR)
(72) Inventeur: RIOU, Isabelle, F-63040 Clermont-Ferrand Cedex 9 (FR); RIOU, Aline, F-63040 Clermont-Ferrand Cedex 9 (FR); CABIOCH, Jean-Luc, 63040 Clermont-Ferrand Cedex 9 (FR)
(74) Mandataire: Cohen, Sylvia
(86) Numéro de dépôt international: PCT/EP2013/071189
(87) Numéro de publication internationale: WO 2014/060287

(56) Documents cités:
- WO-A1-2008/145314
- WO-A2-2006/047509

## Description

La présente invention est relative à une composition de caoutchouc pour la fabrication d'une couche intérieure de pneumatique imperméable à l'air et couramment appelée « gomme intérieure » de pneumatique.

Les pneumatiques sans chambre à air présentent une surface intérieure de faible perméabilité à l'air afin d'éviter un dégonflage du pneumatique et de protéger les zones internes sensibles de ce dernier contre les arrivées d'oxygène et d'eau, telles que les nappes contenant des câbles métalliques sensibles à l'oxydation, cette protection permettant d'améliorer l'endurance du pneumatique. Aujourd'hui une telle protection de la surface intérieure des pneumatiques est généralement réalisée par des gommes intérieures constituées par des compositions élastomériques à base de caoutchouc butyl. Or les performances en terme d'imperméabilité à l'air des caoutchouc butyl sont liées à une épaisseur minimum non négligeable (de l'ordre du millimètre) et donc à certain poids, qui ne permet pas de répondre efficacement à ces nouvelles exigences.

Ainsi il est nécessaire d'ajouter des charges renforçantes, telles que le noir de carbone, à la composition élastomérique de gomme intérieure pour améliorer son imperméabilité. Cependant en quantité importante, ces charges renforçantes nuisent à certaines propriétés de la composition à la fois à cru : difficulté de mise en œuvre de la composition crue, appelée couramment « processabilité », à cuit : dégradation de propriétés mécaniques notamment diminution de la résistance à la flexion. L'introduction de plastifiant de type huile permet de pallier ces aspects de mise en œuvre et de propriétés mécaniques mais pénalise très fortement l'imperméabilité.

Différentes solutions ont été envisagées pour remédier à ces inconvénients en particulier en faisant appel à d'autres types de charges venant s'additionner aux charges renforçantes, souvent connues sous le nom de smectites. Ces smectites organophiles améliorent les propriétés d'imperméabilité des matériaux si elles sont bien dispersées dans le matériau.

La publication WO 2006/047509 de la demanderesse décrit une composition pour gomme intérieure de pneumatique dont la composition à base de caoutchouc majoritairement diénique et comprenant du noir de carbone, comporte des charges non renforçantes constituées par des smectites organophiles réduisant la perméabilité aux gaz, dispersées dans la matrice élastomérique ainsi qu'un plastifiant spécifique constitué par une résine terpénique ayant notamment une température de transition vitreuse supérieure, Tg, à 50°C. Cette composition présente effectivement des propriétés mécaniques et d'imperméabilité la rendant acceptable pour une utilisation en tant que gomme intérieure de pneumatique, grâce à l'effet combiné de ces smectites organophiles et de cette résine à haute Tg.

La demande WO 2008/145314 décrit une composition de caoutchouc pour gomme intérieure de pneumatique à base d'au moins un caoutchouc butyl, une charge renforçante, du graphite et une résine plastifiante hydrocarbonée, qui possède d'aussi bonnes propriétés de processabilité et de résistance en flexion que les compositions de l'art antérieure, et des propriétés améliorées d'imperméabilité au gaz, et qui permet également d'améliorer de façon significative les propriétés de résistance au roulement et d'endurance.

La demanderesse a poursuivi ces recherches et a découvert de façon surprenante une composition de caoutchouc pour gomme intérieure de pneumatique à base d'au moins majoritairement un élastomère fortement diénique, ledit élastomère diénique fortement insaturé étant un élastomère diénique ayant un taux molaire de motifs d'origine diénique supérieur à 50%, une charge organique renforçante, du graphite, de la craie, et une résine plastifiante hydrocarbonée dont la température de transition vitreuse, Tg, est supérieure à 20°C et dont la température de ramollissement est inférieure à 170°C, qui possède des propriétés d'imperméabilité aux gaz améliorées par rapport aux solutions précitées, tout en conservant de bonnes propriétés de processabilité et mécaniques par rapport aux compositions de l'art antérieur.

Les pneumatiques de l'invention sont particulièrement destinés à équiper des véhicules à moteur de type tourisme, incluant les véhicules deux roues (notamment motos), les véhicules 4x4 (à quatre roues motrices), et les véhicules SUV *("Sport Utility Vehicles*"), comme des véhicules industriels choisis en particulier parmi camionnettes et "Poids-lourd" tels que bus, engins de transport routier tels que camions tels que véhicules agricoles ou génie civil.

L'invention ainsi que ses avantages seront aisément compris à la lumière de la description et des exemples de réalisation qui suivent.

### I - MESURES ET TESTS

Les compositions de caoutchouc sont caractérisées, avant et après cuisson, comme indiqué ci-après.

### 1.1 - Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### 1.2 - Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation. On mesure également la constante de vitesse de conversion notée K (exprimée en min⁻¹), d'ordre 1, calculée entre 30% et 80% de conversion, qui permet d'apprécier la cinétique de vulcanisation.

### 1.3 - Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### I.4 - Perméabilité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.

Une valeur arbitraire de 100 est donnée pour la perméabilité à l'oxygène du témoin, un résultat inférieur à 100 indiquant une diminution de la perméabilité à l'oxygène donc une meilleure imperméabilité.

### II - DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, sauf indication expresse différente, tous les pourcentages (%) indiqués sont des pourcentages en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non).

L'abréviation "pce" (usuellement *"phr"* en anglais) signifie parties en poids pour cent parties d'élastomère ou caoutchouc (du total des élastomères si plusieurs élastomères sont présents).

Toutes les valeurs de température de transition vitreuse (« Tg ») sont mesurées de manière connue par DSC (*Differential Scanning Calorimetry*) selon la norme ASTM D3418 (1999), sur des élastomères à l'état sec (i.e, sans huile d'extension), non réticulé. La microstructure des élastomères est bien connue des fournisseurs d'élastomères, déterminable notamment par analyse RMN ou analyse IR.

La gomme intérieure pour pneumatique selon l'invention a donc pour caractéristique essentielle de comporter une composition de caoutchouc comprenant au moins : majoritairement un élastomère diénique fortement insaturé, une charge organique renforçante, du graphite, de la craie, un système plastifiant comprenant une résine plastifiante hydrocarbonée dont la température de transition vitreuse, Tg, est supérieure à 20°C et dont la température de ramollissement est inférieure à 170°C, ledit élastomère diénique fortement insaturé étant un élastomère diénique ayant un taux molaire de motifs d'origine diénique supérieur à 50% ; composants qui vont être décrits en détail ci-après.

### II. 1 - Elastomère diénique fortement insaturé

La gomme intérieure pour pneumatique selon l'invention a donc pour caractéristique essentielle de comporter une composition de caoutchouc comprenant majoritairement un élastomère diénique fortement insaturé.

De préférence, la teneur en élastomère diénique est comprise entre 70 et 100 pce, préférentiellement entre 90 et 100 pce.

Selon une variante de réalisation de l'invention, la composition de caoutchouc comporte en outre minoritairement un élastomère butyl halogéné ou non, la teneur en élastomère butyl étant préférentiellement inférieure à 30 pce.

Les élastomères diéniques peuvent être classés dans deux catégories "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple. Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités - 1,2 comprise entre 4% et 80% ou ceux ayant une teneur (% molaire) en cis-1,4 supérieure à 80%, les polyisoprènes, les copolymères de butadiène-styrène et en particulier ceux ayant une température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR - halogénés par Br, Cl... ou non), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à une gomme intérieure étanche de pneumatique sans chambre (ou autre élément imperméable à l'air), la composition conforme à l'invention peut contenir au moins minoritairement un élastomère diénique essentiellement saturé, en particulier au moins un copolymère EPDM ou un caoutchouc butyle (éventuellement chloré ou bromé), en mélange avec majoritairement des élastomères diéniques fortement insaturés tels que cités précédemment, notamment NR ou IR, BR ou SBR.

Selon un autre mode préférentiel de réalisation de l'invention, la composition de caoutchouc comprend un (ou plusieurs) élastomère diénique dit "à haute Tg" présentant une Tg comprise entre - 70°C et 0°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. Plus préférentiellement, la composition de caoutchouc selon l'invention a pour caractéristique de comporter, à titre d'élastomère diénique fortement insaturé, un copolymère de styrène-butadiène (SBR) dont la température de transition vitreuse (Tg) est supérieure à -40°C, dénommé ci-après "SBR à haute Tg" ou "SBR haute Tg".

Selon un autre mode particulier de réalisation de l'invention, la composition de caoutchouc comprend un couplage d'un (un ou plusieurs) élastomère diénique dit « à haute Tg » et d'un (un ou plusieurs) élastomère diénique dit "à basse Tg" comprise entre -110°C et -80°C, plus préférentiellement entre -105°C et -90°C. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

On utilise de préférence un SBR haute Tg ayant une teneur en styrène comprise entre 5% et 50% en poids et plus particulièrement entre 20% et 40 %, une teneur en liaisons-1,2 de la partie butadiénique comprise entre 4% et 65%, une teneur en liaisons trans-1,4 comprise entre 20% et 80%. L'homme du métier sait comment modifier la microstructure d'un élastomère SBR pour ajuster sa Tg.

Selon un mode particulier de réalisation de l'invention, la composition de caoutchouc comprend entre 40 et 100 pce, en particulier entre 50 et 100 pce, de SBR à haute Tg.

Au SBR haute Tg ci-dessus, peut-être ou peuvent être associé(s) un ou plusieurs autre(s) élastomère(s) diénique(s).

L'élastomère diénique éventuel complémentaire est préférentiellement choisi dans le groupe constitué par les polybutadiènes (BR), les polyisoprènes de synthèse (IR), le caoutchouc naturel (NR), les copolymères de butadiène, les copolymères d'isoprène (autres que IR) et les mélanges de ces élastomères. De tels copolymères sont plus préférentiellement choisis dans le groupe constitué par les copolymères d'isoprène-butadiène (BIR), les copolymères d'isoprène-styrène (SIR), les copolymères d'isoprène-butadiène-styrène (SBIR).

Selon un autre mode de réalisation de l'invention, la composition destinée à une gomme intérieure de pneumatique peut comporter minoritairement un ou plusieurs caoutchoucs butyl, en coupage un ou des élastomères diéniques.

Par caoutchouc butyl, on entend un homopolymère de poly(isobutylène) ou un copolymère de poly(isobutylène) avec de l'isoprène (dans ce cas ce caoutchouc butyl fait partie des élastomères diéniques), ainsi que les dérivés halogénés, en particulier généralement bromés ou chlorés, de ces homopolymères de poly(isobutylène) et copolymères de poly(isobutylène) et isoprène.

On citera à titre d'exemples de caoutchouc butyl convenant particulièrement à la réalisation de l'invention : les copolymères d'isobutylène et d'isoprène (IIR), les caoutchoucs bromo-butyl tels que le copolymère bromoisobutylène-isoprène (BIIR), les caoutchoucs chlorobutyl tels que le copolymère chloroisbutylène-isoprène (CIIR) et les caoutchoucs isobutylène.

Par extension de la définition précédente, on incluera également sous l'appellation « caoutchouc butyl » des copolymères d'isobutylène et de dérivés de styrène tels que les copolymères d'isobutylène et méthylstyrène bromé (BIMS).

### II.2 - Charge organique renforçante

On peut utiliser tout type de charge organique renforçante connue pour ses capacités à renforcer une composition de caoutchouc utilisable pour la fabrication de pneumatiques, par exemple une charge organique telle que du noir de carbone.

Une telle charge renforçante consiste typiquement en des nanoparticules dont la taille moyenne (en masse) est inférieure à 500 nm, le plus souvent comprise entre 20 et 200 nm, en particulier et préférentiellement comprise entre 20 et 150 nm.

De manière préférentielle, le taux de charge oraganique renforçante totale est supérieur à 30 pce, notamment compris entre 30 et 120 pce. En dessous de 20 pce, la cohésion et les propriétés mécaniques de la couche élastomère de protection risquent d'être insuffisantes pour certaines applications, tandis qu'au-delà de 120 pce il existe un risque d'augmentation de l'hystérèse et donc de la résistance au roulement des pneumatiques. Pour ces raisons, le taux de charge renforçante totale est plus préférentiellement compris dans un domaine de 30 à 100 pce.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, 600, 700 ou 900 (grades ASTM), comme par exemple les noirs N115, N134, N234, N326, N330, N339, N347, N375, N683, N772, N990.

Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

### II.3 - Charge de type graphite

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A ; il appartient au groupe cristallin : groupe d'espace P63/mmc.

Le graphite ne peut pas être considéré comme une charge renforçante au sens de la définition précisée dans le paragraphe III.2, cependant il peut être considéré comme une charge semi-renforçante dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un composé chimique à l'état liquide, par exemple un acide, entre ses plans de graphène;
- (c) tout graphite naturel expansé, ce dernier étant réalisé en deux temps : intercalation d'un composé chimique à l'état liquide, par exemple un acide, entre les plans de graphène d'un graphite naturel par traitement chimique et expansion à haute température ;
- (d) tout graphite synthétique obtenu par graphitisation de coke de pétrole.

Les compositions de l'invention peuvent contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.

On a constaté de façon surprenante que les graphites avec n'importe lequel de ces deux types de morphologie convenaient dans les compositions conformes à l'invention, cependant les graphites présentant une forme lamellaire conviennent préférentiellement, et d'autant plus lorsqu'ils sont orientés de manière à présenter leur plus grande face perpendiculairement au flux de perméation de gaz.

Le graphite est présent dans la composition conforme à l'invention dans des taux allant de 3 pce à 50 pce, et de préférence entre 5 et 30 pce.

### II.4 - La craie : charge non renforçante

La gomme intérieure pour pneumatique comporte une composition qui a pour caractéristique essentielle de comporter, à titre de charge non renforçante, de la craie. Préférentiellement, la teneur en craie est comprise entre 3 et 50, encore plus préférentiellement entre 5 et 30 pce.

La craie se présente préférentiellement sous la forme de microparticules dont la taille moyenne (en masse) est supérieure à 1 µm. La taille médiane des microparticules de craie est préférentiellement comprise entre 1 et 200 µm, plus particulièrement entre 5 et 100 µm.

En dessous des minima ci-dessus, tant pour le taux que pour la taille des microparticules de craie, l'effet technique visé d'imperméabilté de la composition n'est pas obtenu ; au-dessus des maxima on observe une dégradation de la mise en œuvre et une diminution de la cohésion des mélanges.

Les craies connues de l'homme du métier sont les carbonates de calcium naturels (craie) ou synthétiques avec ou sans enrobage (par exemple avec de l'acide stéarique).

A titre d'exemples de telles craies préférentielles, et disponibles commercialement, on peut citer par exemple la craie vendue sous la dénomination "Omya BLS" par la société Omya.

Selon un autre mode de réalisation, le graphite et la craie peuvent être utilisés avec d'autres charges inertes telles que particules d'argile, bentonite, talc, kaolin, microbilles de verre, glass flakes.

### II.5 - Résine plastifiante hydrocarbonée

La composition de la gomme intérieure pour pneumatique selon l'invention a pour autre caractéristique essentielle de comporter un système plastifiant comprenant une résine hydrocarbonée dont la température de transition vitreuse, Tg est supérieure à 20°C et la température de ramollissement est inférieure à 170°C.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, naphténiques, aromatiques ou encore du type aliphatique/ naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (Differential Scanning Calorimetry), selon la norme ASTM D3418 (1999), et la température de ramolissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1 100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

Le taux de résine hydrocarbonée est préférentiellement compris entre 2 et 35 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Le taux de résine hydrocarbonée est encore plus préférentiellement compris entre 5 et 25 pce.

La composition de la gomme intérieure pour pneumatique peut comprendre en outre un plastifiant liquide à 20 °C, il est dit à « basse Tg », c'est-à-dire qu'il présente une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Toute huile d'extension, qu'elle soit de nature aromatique ou non aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*)*,* les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols. Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides ; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

### 11.6 - Additifs divers

Les compositions de caoutchouc de gommes intérieures des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.7 - Préparation des compositions de caoutchouc

Les compositions utilisées dans les bandes de roulement des pneumatiques de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) l'élastomère diénique fortement insaturé avec la charge organique renforçante, les autres charges, le système plastifiant, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques fortement insaturés, le système plastifiant, la charge organique renforçante et les autres charges), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide, par exemple le « TBZTD » (disulfure de tétrabenzylthiurame).

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une gomme intérieure.

L'invention concerne les pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III. 1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique fortement insaturé, la charge organique renforçante, le graphite, la craie, le système plastifiant, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (home-finisseur) à 30 °C, en mélangeant le tout (phase productive) pendant un temps approprié (par exemple entre 5 et 12 min). Les compositions ainsi obtenues sont ensuite extrudées sous la forme d'une gomme intérieure de pneumatique.

### III.2 - Essais

Les essais qui suivent démontrent de façon surprenante de bonnes propriétés d'imperméabilité et mécaniques de gommes intérieures pour pneumatique des véhicules deux roues (notamment motos, vélos...).

Pour les besoins de ces essais, quatre compositions de caoutchouc pour gomme intérieure de pneumatique ont été préparées comme indiqué précédemment, une conformément à l'invention (notée ci-après C.4) et trois non conformément à l'invention (compositions témoins notée ci-après C.1 à C.3). Leurs formulations (exprimées en pce) sont présentées dans le tableau 1 annexé.

Toutes, les compositions de caoutchouc C.1 à C.4 sont à base de 70 pce d'un caoutchouc styrène-butadiène présentant une haute température de transition vitreuse, coupé avec un caoutchouc styrène-butadiène classique.

La composition C.1 est une composition témoin, conventionnelle utilisée dans les gommes intérieures de pneumatiques, qui comporte 80 pce d'une charge organique renforçante et aucune autre charge. Les compostions C.2 à C.4 comportent aussi 80 pce de cette même charge renforçante. La composition C.2 comporte en plus 20 pce de craie mais pas de graphite, et la composition C.3 comporte en plus 15 pce de graphite mais pas de craie. Seule la composition C.4 est conforme à l'invention, et comporte à la fois 20 pce de craie et 15 pce de graphite.

Les compositions C.1 à C.4 comportent toutes un mélange de deux plastifiants : un plastifiant liquide de type huile (20 pce d'huile TDAE) et 10 pce d'une résine plastifiante hydrocarbonée (résine C5).

Leurs propriétés avant et après cuisson (vulcanisation) ont été résumées dans le tableau 2 annexé.

On constate que la composition C.4 conforme à l'invention comprenant du graphite et de la craie, présente à l'état cru une processabilité équivalente à celle des compositions témoins C.1 à C.3 ; de plus ses propriétés rhéométriques sont similaires à celles des compositions C.1 à C.3.

De plus, la composition C.4 conforme à l'invention présente une perméabilité inférieure à celle des compositions témoins C.1 et C.2, ce qui témoigne d'une augmentation de l'imperméabilité d'une telle composition. La composition C.4 présente une perméabilité inférieure à la composition témoin C.3, qui est une composition déjà très performante sur cet aspect.

Les compositions C.3 et C.4 qui comportent toutes les deux du graphite présentent une rigidité (MA10) supérieure à celle des compositions témoins C.1 et C.2. Cette augmentation de rigidité est acceptable pour l'homme du métier qui réalise la conception des pneumatiques. La composition C.4 comportant à la fois du graphite et de la craie, présente une rigidité équivalente à la composition C.3 qui comporte seulement du graphite. L'ajout de la craie dans la composition C.4 selon l'invention ne contribue pas à augmenter la rigidité de manière significative.

Ainsi la composition conforme à l'invention incluant du graphite et une charge non renforçante de type craie, permet d'améliorer de façon notable les propriétés d'étanchéité par rapport à une composition témoin (C.3) qui comporte seulement du graphite et qui est déjà très performante sur cet aspect, mais aussi par rapport à une composition témoin classiquement utilisée dans les gommes intérieures de pneumatiques (C.2), tout en maintenant un bon niveau des propriétés de rigidité, de processabilité que les compositions témoins classiques.

**Tableau 1**

| **Composition** | **C.1** | **C.2** | **C.3** | **C.4** |
|---|---|---|---|---|
| SBR1 (1) | 70 | 70 | 70 | 70 |
| SBR2 (2) | 30 | 30 | 30 | 30 |
| Charge (3) | 80 | 80 | 80 | 80 |
| Craie (4) | - | 20 | - | 20 |
| Graphite (5) | - | - | 15 | 15 |
| Huiles (6) | 20 | 20 | 20 | 20 |
| Résine (7) | 10 | 10 | 10 | 10 |
| 6PPD (8) | 1.5 | 1.5 | 1.5 | 1.5 |
| ZnO (9) | 4 | 4 | 4 | 4 |
| Acide stéarique (10) | 1 | 1 | 1 | 1 |
| CBS (11) | 0.7 | 0.7 | 0.7 | 0.7 |
| ZBEC (12) | 0.4 | 0.4 | 0.4 | 0.4 |
| DPG (13) | 1 | 1 | 1 | 1 |
| Soufre | 1 | 1 | 1 | 1 |

| | | | | |
|---|---|---|---|---|
| (1) SBR (taux exprimé en SBR sec) avec 41% de motifs styrène et 65% de motifs butadiéne ; avec pour la partie butadiénique, 24% de 1-2, 26% de motifs 1-4 cis, et 50% de motifs 1-4 trans, (Tg = -25°C) ; (2) SBR avec 40% de motifs styrène et 56% de motifs butadiéne ; avec pour la partie butadiénique, 24% de 1-2, 26% de motifs 1-4 cis, et 50% de motifs 1-4 trans, (Tg = -30°C) ; (3) Noir de carbone (« Zeosil 1165MP » de la société Rhodia) ; (4) Craie (« CaCO₃ ST » de la société Omya) ; (5) Graphite (« Timerx 80 150 » de la société Timcal ; (6) TDAE ; (7) Résine C5; (8) N-1,3-diméthylbutyl-N-phénylparaphénylènediamine (Santoflex 6-PPD de la société Flexsys) ; (9) Oxyde de zinc (grade industriel - société Umicore) ; (10) Stéarine (« Pristerene » de la société Uniquema) ; (11) N-dicyclohexyl-2-benzothiazol-sulfénamide ("Santocure CBS" de la société Flexsys) ; (12) Dibenzyl di thiocarbamate de zinc (« Perkacit ZBEC » de la société Performance Additives) ; (13) DPG = diphénylguanidine (« Perkacit DPG » de la société Flexsys). | | | | |

**Tableau 2**

| **Composition** | **C.1** | **C.2** | **C.3** | **C.4** |
|---|---|---|---|---|
| Propriétés avant cuisson | | | | |
| Mooney | 39 | 43 | 41 | 42 |

| Rhéométrie | | | | |
|---|---|---|---|---|
| Ti (min) | 6.8 | 6.8 | 7.1 | 6.7 |
| K (min⁻¹) | -0.4 | -0.43 | -0.38 | -0.41 |

| Propriétés après cuisson | | | | |
|---|---|---|---|---|
| MA10 (MPa) | 2.3 | 2.4 | 3.2 | 3.4 |
| MA100 (MPa) | 0.85 | 0.81 | 1.1 | 1.1 |
| Perméabilité à l'oxygène | 100 | 100 | 89 | 82 |

## Revendications

1. Gomme intérieure pour pneumatique ayant une composition de caoutchouc à base d'au moins :
- majoritairement un élastomère diénique fortement insaturé ;
- une charge organique renforçante ;
- du graphite ;
- de la craie ;
- une résine plastifiante hydrocarbonée dont la température de transition vitreuse, Tg, est supérieure à 20°C et la température de ramollissement est inférieure à 170°C,
ledit élastomère diénique fortement insaturé étant un élastomère diénique ayant un taux molaire de motifs d'origine diénique supérieur à 50%.

2. Gomme intérieure selon la revendication 1, dans laquelle l'élastomère diénique fortement insaturé est choisi dans le groupe constitué par les polybutadiènes (BR), les polyisoprènes (IR) de synthèse, le caoutchouc naturel (NR), les copolymères de butadiène, les copolymères d'isoprène et les mélanges de ces élastomères.

3. Gomme intérieure selon la revendication 2, dans laquelle l'élastomère diénique est choisi dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

4. Gomme intérieure selon l'une quelconque des revendications 1 à 3, dans laquelle la teneur en élastomère diénique est comprise entre 70 et 100 pce, préférentiellement entre 90 et 100 pce.

5. Gomme intérieure selon l'une quelconque des revendications 1 à 4, dans laquelle la composition de caoutchouc comporte en outre minoritairement un élastomère butyl halogéné ou non, préférentiellement moins de 30 pce.

6. Gomme intérieure selon l'une quelconque des revendications 1 à 5, dans laquelle l'élastomère diénique est un élastomère à haute température de transition vitreuse qui est supérieure à -40°C.

7. Gomme intérieure selon l'une quelconque des revendications 1 à 6, dans laquelle la charge organique renforçante comprend du noir de carbone avec un taux de noir de carbone compris entre 30 et 120 pce.

8. Gomme intérieure selon l'une quelconque des revendications 1 à 7, dans laquelle la résine plastifiante hydrocarbonée a une Tg supérieure à +30°C.

9. Gomme intérieure selon la revendication 8, dans laquelle le taux de résine plastifiante hydrocarbonée est compris entre 2 et 35 pce, de préférence entre 5 et 25 pce.

10. Gomme intérieure selon l'une quelconque des revendications 8 ou 9, dans laquelle la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

11. Gomme intérieure selon l'une quelconque des revendications 1 à 10, dans laquelle le graphite se présente sous une forme lamellaire, et est un graphite naturel.

12. Gomme intérieure selon l'une quelconque des revendications 1 à 10, dans laquelle le graphite se présente sous une forme lamellaire et est un graphite expansé ou un graphite synthétique.

13. Gomme intérieure selon l'une quelconque des revendications 11 ou 12, dans laquelle le taux de graphite est compris entre 3 et 50 pce.

14. Gomme intérieure selon l'une quelconque des revendications 1 à 13, dans laquelle la composition contient une teneur en craie comprise entre 3 et 50 pce.

15. Pneumatique comportant une gomme intérieure selon l'une quelconque des revendications 1 à 14.

## Patentansprüche

1. Innenseele für Reifen mit einer Kautschukzusammensetzung auf Basis von mindestens:
- hauptsächlich einem hoch ungesättigten Dienelastomer;
- einem verstärkenden organischen Füllstoff;
- Graphit;
- Kreide;
- einem Kohlenwasserstoff-Weichmacherharz mit einer Glasübergangstemperatur Tg von mehr als 20 °C und einer Erweichungstemperatur von weniger als 170 °C,
wobei es sich bei dem hoch ungesättigten Dienelastomer um ein Dienelastomer mit einem molaren Gehalt an Einheiten dienischen Ursprungs von mehr als 50 °C handelt.

2. Innenseele nach Anspruch 1, wobei das hoch ungesättigte Dienelastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Copolymere ausgewählt ist.

3. Innenseele nach Anspruch 2, wobei das Dienelastomer aus der Gruppe bestehend aus Butadien-Styrol-Copolymeren (SBR), Isopren-Butadien-Copolymeren (BIR), Isopren-Styrol-Copolymeren (SIR) und Isopren-Butadien-Styrol-Copolymeren (SBIR) und Mischungen dieser Elastomere ausgewählt ist.

4. Innenseele nach einem der Ansprüche 1 bis 3, wobei der Gehalt an Dienelastomer zwischen 70 und 100 phe, vorzugsweise zwischen 90 und 100 phe, liegt.

5. Innenseele nach einem der Ansprüche 1 bis 4, wobei die Kautschukzusammensetzung außerdem nebensächlich ein gegebenenfalls halogeniertes Butylelastomer umfasst, vorzugsweise weniger als 30 phe.

6. Innenseele nach einem der Ansprüche 1 bis 5, wobei es sich bei dem Dienelastomer um ein Elastomer mit hoher Glasübergangstemperatur, die über -40 °C liegt, handelt.

7. Innenseele nach einem der Ansprüche 1 bis 6, wobei der verstärkende organische Füllstoff Ruß umfasst, wobei der Rußgehalt zwischen 30 und 120 phe liegt.

8. Innenseele nach einem der Ansprüche 1 bis 7, wobei das Kohlenwasserstoff-Weichmacherharz eine Tg von mehr als +30 °C aufweist.

9. Innenseele nach Anspruch 8, wobei der Gehalt an Kohlenwasserstoff-Weichmacherharz zwischen 2 und 35 phe, vorzugsweise zwischen 5 und 25 phe, liegt.

10. Innenseele nach Anspruch 8 oder 9, wobei das Kohlenwasserstoff-Weichmacherharz aus der Gruppe bestehend aus Homopolymer- oder Copolymerharzen von Cyclopentadien (abgekürzt CPD) oder Dicyclopentadien (abgekürzt DCPD), Terpen-Homopolymer- oder -Copolymerharzen, C5-Schnitt-Homopolymer- oder -Copolymerharzen und Mischungen dieser Harze ausgewählt ist.

11. Innenseele nach einem der Ansprüche 1 bis 10, wobei der Graphit in einer lamellaren Form vorliegt und ein natürlicher Graphit ist.

12. Innenseele nach einem der Ansprüche 1 bis 10, wobei der Graphit in einer lamellaren Form vorliegt und ein expandierter Graphit oder ein synthetischer Graphit ist.

13. Innenseele nach Anspruch 11 oder 12, wobei der Graphitgehalt zwischen 3 und 50 phe liegt.

14. Innenseele nach einem der Ansprüche 1 bis 13, wobei die Zusammensetzung einen Kreidegehalt zwischen 3 und 50 phe enthält.

15. Reifen mit einer Innenseele nach einem der Ansprüche 1 bis 14.

## Claims

1. Inner liner for tyre having a rubber composition based on at least:
- predominantly a highly unsaturated diene elastomer;
- a reinforcing organic filler;
- graphite;
- chalk;
- a plasticizing hydrocarbon resin, the glass transition temperature, Tg, of which is greater than 20°C and the softening point of which is less than 170°C,
said highly unsaturated diene elastomer being a diene elastomer having a content of units of diene origin that is greater than 50%.

2. Inner liner according to Claim 1, in which the highly unsaturated diene elastomer is selected from the group consisting of polybutadienes (BRs), synthetic polyisoprenes (IRs), natural rubber (NR), butadiene copolymers, isoprene copolymers and mixtures of these elastomers.

3. Inner liner according to Claim 2, in which the diene elastomer is selected from the group consisting of butadiene-styrene (SBR) copolymers, isoprene-butadiene (BIR) copolymers, isoprene-styrene (SIR) copolymers and isoprene-butadiene-styrene (SBIR) copolymers and mixtures of these elastomers.

4. Inner liner according to any one of Claims 1 to 3, in which the content of diene elastomer is between 70 and 100 phr, preferably between 90 and 100 phr.

5. Inner liner according to any one of Claims 1 to 4, in which the rubber composition additionally comprises, in a minority amount, a halogenated or non- halogenated butyl elastomer, preferably less than 30 phr.

6. Inner liner according to any one of Claims 1 to 5, in which the diene elastomer is an elastomer having a high glass transition temperature which is greater than -40°C.

7. Inner liner according to any one of Claims 1 to 6, in which the reinforcing organic filler comprises carbon black; the content of carbon black is between 30 and 120 phr.

8. Inner liner according to any one of Claims 1 to 7, in which the plasticizing hydrocarbon resin has a Tg of greater than +30°C.

9. Inner liner according to Claim 8, in which the content of plasticizing hydrocarbon resin is between 2 and 35 phr, preferably between 5 and 25 phr.

10. Inner liner according to any one of Claims 8 to 9, in which the plasticizing hydrocarbon resin is selected from the group consisting of cyclopentadiene (abbreviated to CPD) or dicyclopentadiene (abbreviated to DCPD) homopolymer or copolymer resins, terpene homopolymer or copolymer resins, C₅ fraction homopolymer or copolymer resins and the mixtures of these resins.

11. Inner liner according to any one of Claims 1 to 10, in which the graphite is in a platy form and is a natural graphite.

12. Inner liner according to any one of Claims 1 to 10, in which the graphite is in a platy form and is an expanded graphite or a synthetic graphite.

13. Inner liner according to any one of Claims 11 or 12, in which the graphite content is between 3 and 50 phr.

14. Inner liner according to any one of Claims 1 to 13, in which the composition contains a chalk content of between 3 and 50 phr.

15. Tyre comprising an inner liner according to any one of Claims 1 to 14.
